# FASCICULE DE BREVET EUROPEEN

(11) **EP 3 249 127 B1**
(45) Date de publication et mention de la délivrance du brevet: **11.09.2019**
(21) Numéro de dépôt: 17160117.2
(22) Date de dépôt: 09.03.2017
(51) Int. Cl.: E04B 5/38, E04G 15/06, E04B 5/48, B28B 23/00

(54) **PRÉDALLE COMPRENANT AU MOINS UNE INCORPORATION ET PROCÉDÉ DE FABRICATION D'UN PLANCHER À L AIDE D'UNE TELLE PRÉDALLE**
ELEMENTPLATTE, DIE MINDESTENS EIN EINBAUELEMENT ENTHÄLT, UND HERSTELLUNGSVERFAHREN EINER DECKE MITHILFE DIESER ELEMENTPLATTE
PRE-SLAB COMPRISING AT LEAST ONE INCLUSION AND METHOD FOR MANUFACTURING A FLOOR USING SUCH A PRE-SLAB

(30) Priorité: 27.05.2016 FR 1654756
(43) Date de publication de la demande: 29.11.2017
(73) Titulaire: KP1, 84000 Avignon (FR)
(72) Inventeur: ABRIC, Laurent, 30150 MONFAUCON (FR); BENOIT, Yuraïma, 30133 LES ANGLES (FR); MAHE, Benjamin, 84700 Sorgues (FR); GARCIA, Richard, 30650 ROCHEFORT DU GARD (FR); HAOUR, Thierry, 30650 ROCHEFORT SUR GARD (FR); ESTEVENIN, Eric, 13560 SENAS (FR)
(74) Mandataire: Decorchemont, Audrey Véronique Christèle

(56) Documents cités:
- EP-A1- 2 474 400
- EP-A1- 2 476 528
- CA-A1- 2 206 406
- DE-A1- 19 745 385
- FR-A1- 2 804 147
- Stichting Promotie Stipb: "Richlijnen leidingen in breedplaatvloeren", , 2008, pages 1-6, XP055442512, Extrait de l'Internet: URL:http://www.joostdevree.nl/bouwkunde2/j pgb/breedplaatvloer_8_richtlijnen_leidinge n_in_breedplaatvloeren_www_stipb_nl.pdf [extrait le 2018-01-19]
- Prefabat: "L'éLectricité préfabriquée au service des électriciens", , 2011, pages 1-15, XP55443221, Gerardmer (FR) Extrait de l'Internet: URL:http://www.prefabat.fr/spip.php?action =acceder_document&arg=129&cle=340d046b5772 63491fabf7454118c6baeead3f07&file=pdf/Pieu vres-electriques-Prefabat.pdf [extrait le 2018-01-22]

## Description

L'invention concerne une prédalle comprenant au moins une incorporation. L'invention concerne également un procédé de fabrication d'un plancher à l'aide d'une telle prédalle.

### ARRIERE PLAN TECHNOLOGIQUE DE L'INVENTION

La construction d'un bâtiment nécessite bien entendu la création d'un ou de plusieurs planchers. Pour faciliter le montage des planchers, les ouvriers ont généralement recours à des prédalles.

Les ouvriers disposent ainsi les prédalles sur un réseau de poutres d'étaiement pour former une base sur laquelle ils débutent la pose d'armatures métalliques destinées à renforcer structurellement le plancher. Les ouvriers viennent ensuite coffrer les réservations des prédalles qui forment des ouvertures traversant les prédalles.

D'autres corps de métier peuvent alors intervenir sur la base, notamment des électriciens et des plombiers. Ils viennent en particulier repérer la base et, en fonction de différents plans de construction, coffrent aux endroits qu'ils jugent adéquats des espaces de réservation supplémentaires qui ne traversent donc pas les prédalles. Puis, ils viennent agencer les gaînes comportant les câbles et les conduites nécessaires pour l'électricité, la plomberie, la communication ... sur la base en les raccordant notamment aux différents espaces de réservation supplémentaires.

Une fois les gaînes agencées, les ouvriers reviennent finir la construction du plancher. A cet effet, les ouvriers achèvent le montage du réseau d'armatures puis coulent la dalle de compression.

Lorsque le bâtiment est monté, différents corps de métier peuvent alors intervenir sur le plancher fini pour ouvrir les différentes réservations traversant entièrement le plancher et les différentes réservations traversant seulement la dalle de compression afin d'une part agencer un réseau vertical de canalisations au niveau des réservations traversant entièrement le plancher et d'autre part utiliser les câbles et conduites des gaînes accessibles par les réservations traversant seulement la dalle de compression.

Le processus de montage d'un plancher s'avère donc relativement long et fastidieux.

EP 2 474 400 A1 divulgue une prédalle selon le préambule de la revendication 1.

### OBJET DE L'INVENTION

Un but de l'invention est de proposer une prédalle permettant de simplifier et d'accélérer le montage d'un plancher. Un but de l'invention est également de proposer un procédé de fabrication d'un tel plancher.

### BREVE DESCRIPTION DE L'INVENTION

En vue de la réalisation de ce but, on propose une prédalle selon la revendication comportant un corps en béton.

Selon l'invention, la prédalle comporte une incorporation qui est solidarisée à la prédalle de sorte à être saillante d'une face supérieure de la prédalle sans s'étendre jusqu'à une face inférieure de la prédalle, l'incorporation étant destinée à former une réservation dans une dalle de compression coulée ultérieurement sur la prédalle.

De la sorte, la prédalle comporte directement une incorporation et ce dès sa sortie d'usine. La prédalle livrée sur chantier comporte donc déjà ladite incorporation. Ladite incorporation étant destinée à être utilisée pour la mise en place d'un réseau de gaînes (comportant les câbles et les conduites nécessaires pour l'électricité, la plomberie, la communication ...) sur la face supérieure de la prédalle, la prédalle simplifie donc le montage dudit réseau. En outre, lorsque différentes prédalles, dont au moins celle de l'invention, sont agencées pour former une base d'un plancher, il est possible de s'affranchir d'une longue et fastidieuse étape de repérage de cette base par un électricien et/ou par un plombier et de mise en place d' incorporations pour créer des réservations supplémentaires puisque la ou les incorporations sont déjà en place et solidarisées à la prédalle ou les prédalles.

Par ailleurs, la préparation des incorporations (ouverture et/ou coffrage ou autres actions) avant le coulage d'une dalle de compression peut ainsi se faire directement par les mêmes ouvriers ayant installé les différentes prédalles ce qui simplifie et accélère le montage d'un plancher.

En outre, il s'avère possible d'agencer plus efficacement des armatures de soutien structurel du futur plancher sur la base formée par les différentes prédalles puisque la ou les incorporations sont déjà présentes sur les prédalles.

On note que les incorporations ne traversent pas la prédalle et ne forment donc pas de réservation traversant la prédalle.

Pour la présente demande, les termes de « supérieur », « inférieur », « externe » ... sont bien entendu définis relativement à la position en service de la prédalle c'est-à-dire lorsque la prédalle est agencée dans un bâtiment en construction pour former une partie de la base sur laquelle est coulée la dalle de compression.

L'invention concerne également un procédé de fabrication d'un plancher selon la revendication 17 comportant les étapes de :
accoler des prédalles pour former une base du plancher, au moins l'une des prédalles étant la prédalle telle que précédemment décrite,
- poser un réseau de gaînes sur la base, au moins une gaîne étant raccordée à l'incorporation,
- couler la dalle de compression sur la base.

Selon l'invention, la prédalle comporte également au moins une réservation ménagée dans le corps de la prédalle.

Selon l'invention, la prédalle comporte un boîtier de réservation associé à la réservation.

De façon particulière, la réservation est définie par le boîtier de réservation.

De façon particulière, le boîtier de réservation est conformé pour créer un premier niveau de coffrage dans le corps en béton de la prédalle et pour créer un deuxième niveau de coffrage destiné à créer une ouverture dans une dalle de compression coulée sur la prédalle.

De façon particulière, le boîtier de réservation est conformé de sorte que le deuxième niveau de coffrage soit dépliable.

De façon particulière, le boîtier de réservation présente un fond fermant la réservation au niveau de la face inférieure de la prédalle.

De façon particulière, le boîtier de réservation est conformé de sorte à présenter un couvercle fermant le boîtier de réservation.

De façon particulière, l'incorporation est dans une première couleur et le boîtier de réservation dans une deuxième couleur différente de la première couleur.

Selon l'invention, l'incorporation et le boitier de réservation comporte chacun un signe alphanumérique qui lui est propre.

De façon particulière, l'incorporation est ancrée dans le corps en béton de la prédalle.

De façon particulière, l'incorporation est conformée pour créer un coffrage destiné à créer une ouverture dans une dalle de compression coulée sur la prédalle.

De façon particulière, l'incorporation est conformée de sorte à pouvoir être dépliée et repliée.

De façon particulière, l'incorporation comporte un couvercle fermant l'incorporation lorsqu'elle est en position dépliée.

De façon particulière, la prédalle comporte des moyens de repérage d'un chemin à faire emprunter à au moins une gaine destinée à s'étendre sur la face supérieure de la prédalle, lesdits moyens de repérage étant agencés sur la face supérieure de la prédalle.

De façon particulière, les moyens de repérage comportent des moyens de guidage destinés à guider une gaine agencée sur une face supérieure de la prédalle.

De façon particulière, les moyens de guidage comportent au moins un cavalier solidarisé à la prédalle et à travers lequel la gaîne est destinée à s'étendre.

De façon particulière, le cavalier est conformé de sorte à pouvoir être déplié et replié.

De façon particulière, le cavalier est ancré dans le corps en béton.

De façon particulière, le procédé comprend l'étape de préparer l'incorporation de la prédalle pour le coulage de la future dalle de compression.

De façon particulière, le procédé comprend l'étape d'établir un plan dédié aux prédalles et de livrer ce plan avec les prédalles, ce plan dédié étant configuré de sorte à symboliser les prédalles et les différentes incorporations et boîtiers de réservation.

De façon particulière, le procédé comprend l'étape de livrer les gaînes directement avec les prédalles.

De façon particulière, les gaînes sont d'une couleur différente selon le type de câbles et/ou de conduites que la gaîne concernée contient.

De façon particulière, chaque gaîne comporte également un symbole associé aux incorporations que la gaîne concernée est censé relier.

De façon particulière, les différents gaînes sont livrés sur chantier avec les prédalles et le plan dédié en étant regroupés par couleur dans un même paquet et/ou en étant regroupés par chemin à emprunter dans un même paquet.

L'invention concerne également un lot de deux prédalles dont l'une telle que précédemment décrit et dont l'autre comporte un corps en béton et au moins une réservation ménagée dans le corps de la prédalle.

### BREVE DESCRIPTION DES DESSINS

L'invention sera mieux comprise à la lumière de la description qui suit d'un mode de réalisation particulier non limitatif de l'invention.

Il sera fait référence aux figures ci-jointes parmi lesquelles :
- la figure 1 est une vue en perspective d'une prédalle selon un mode de réalisation particulier de l'invention,
- les figures 2a à 2f illustrent schématiquement les différentes étapes de montage d'un plancher à l'aide de prédalles telle que celle illustrée à la figure 1.

### DESCRIPTION DETAILLEE DE L'INVENTION

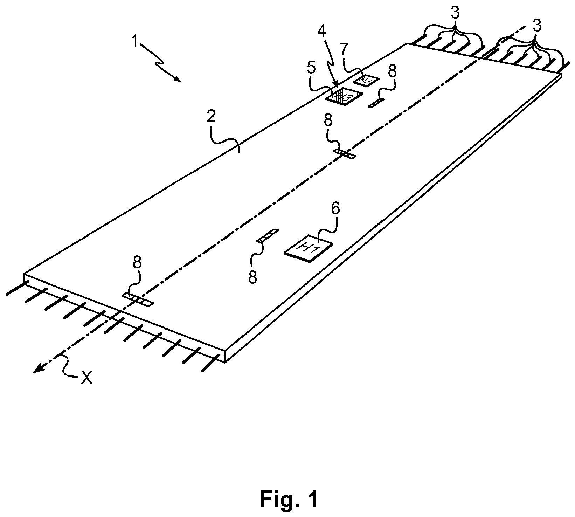

En référence à la figure 1, la prédalle 1 selon un mode de réalisation particulier de l'invention comporte un corps en béton 2 s'étendant longitudinalement selon un axe X. Le corps en béton 2 comporte ainsi deux faces principales, une face supérieure et une face inférieure.

De façon connue en soi, des armatures métalliques 3 sont ancrées dans le corps en béton 2 de sorte à s'étendre également chacune longitudinalement selon l'axe X.

La prédalle 1 comporte ici une seule réservation 4 s'étendant sur toute la hauteur du corps en béton 2 pour former une ouverture traversante dans la prédalle 1.

La réservation 4 est agencée sur la prédalle 1 en fonction de plans de construction d'un plancher dont la prédalle est destinée à faire partie (par exemple plan de type EXE ou encore de type DCE) afin que la prédalle 1 soit agencée de façon adéquate pour le futur passage de canalisations verticales.

De préférence, cette réservation 4 est définie par un boîtier de réservation 5. Le boîtier de réservation 5 est ainsi ancré dans le corps en béton 2 de sorte à s'étendre sur toute la hauteur de la prédalle 1 pour définir la réservation 4.

Ceci facilite la création de la réservation 4 dans la prédalle 1 puisqu'un ouvrier n'a qu'à simplement agencer le boîtier de réservation 5 dans le moule de fabrication de la prédalle 1 pour directement créer la réservation 4 lors du coulage du corps en béton 2.

De façon particulière, le boîtier de réservation 5 est apte à créer non seulement un premier niveau de coffrage au moment du coulage du corps en béton 2 pour former la réserve 4 traversante dans la prédalle 1 mais est également apte à créer un deuxième niveau de coffrage au moment du coulage d'une dalle de compression du plancher.

Le boîtier de réservation 5 est ainsi conformé de sorte à comporter :
- une première portion de coffrage ancrée dans le corps en béton 2 pour définir la réserve 4, et
- une deuxième portion de coffrage s'étendant dans le prolongement de la première portion de sorte à former le deuxième niveau de coffrage, la deuxième portion n'étant donc pas ou peu ancrée dans le corps en béton 2.

De préférence, le boîtier de réservation 5 est conformé de sorte que la deuxième portion est montée articulée sur la première portion entre une position repliée et une position dépliée dans laquelle la deuxième portion s'étend dans le prolongement de la première portion pour former le deuxième niveau de coffrage.

Ainsi, tant que la prédalle 1 n'est pas en place sur le chantier, la deuxième portion du boîtier de réservation 5 est repliée ce qui permet de manipuler et de stocker plus facilement la prédalle 1, le boîtier de réservation 5 ne dépassant alors pas ou peu de la face supérieure de la prédalle 1.

De façon préférée, le boîtier de réservation 5 est conformé de sorte que dans la position repliée, la deuxième portion recouvre la réservation 4 définie par la première portion.

De la sorte, la réservation 4 n'est pas accessible tant que la deuxième portion n'a pas été volontairement dépliée ce qui rend la prédalle 1 plus sûre d'utilisation notamment lorsqu'elle est agencée sur le bâtiment en construction pour former une base du plancher.

La première portion est par exemple conformée de sorte à présenter quatre faces latérales formant un cube ouvert sur le dessus et le dessous et la deuxième portion est par exemple conformée de sorte à présenter également quatre autres faces latérales formant un cube ouvert sur le dessus et le dessous, chaque face latérale de la deuxième portion s'étendant dans le prolongement de l'une des faces latérales de la première portion.

De préférence, le boîtier de réservation 5 est conformé de sorte à présenter un fond fermant la réservation au niveau de la face inférieure de la prédalle.

Ceci permet de former directement un fond coffrant pour la réservation 4 pour le coulage de béton à l'intérieur de ladite réservation 4 une fois le plancher entièrement monté et des canalisations agencées dans ladite réservation 4.

A cet effet, la première portion est ici conformée de sorte à présenter une paroi supplémentaire solidarisée aux quatre faces latérales pour fermer le bas du cube délimité par les quatre faces latérales.

De façon particulière, le boîtier de réservation 5 est conformé de sorte à présenter un couvercle fermant le boîtier de réservation. A cet effet, la deuxième portion est ici conformée de sorte à présenter une paroi supplémentaire solidarisée aux quatre faces latérales pour fermer le haut du cube délimité par les quatre faces latérales de la deuxième portion lorsque celle-ci est dépliée et s'étend dans le prolongement de la première portion. Le couvercle est ici articulé sur le reste de la deuxième portion pour pouvoir laisser aisément accès à l'intérieur de la réservation 4.

On protège ainsi l'intérieur de la réservation 4 lors du coulage de la dalle de compression.

La prédalle 1 comporte en outre ici deux incorporations 6, 7 qui sont solidarisées à la prédalle 1 de sorte à être saillantes de la face supérieure de la prédalle sans s'étendre jusqu'à la face inférieure de la prédalle. Les incorporations 6, 7 ne forment donc pas d'ouverture traversante dans la prédalle 1.

Chacune des incorporations 6, 7 est ici ancrée dans le corps en béton 2 de la prédalle 1.

Comme pour la réservation 4, chaque incorporation 6, 7 est agencée sur la prédalle 1 en fonction des plans de construction du plancher dont la prédalle 1 est destinée à faire partie (par exemple plan de type EXE ou encore de type DCE) afin que les incorporations 6, 7 soient agencées de façon adéquate pour le futur passage d'un réseau de gaînes.

De préférence, chaque incorporation 6, 7 est conformée de sorte à servir seule de portion de coffrage pour une réservation supplémentaire au moment du coulage de la dalle de compression.

De façon préférée, chaque incorporation 6, 7 est conformée de sorte à pouvoir être dépliée et repliée.

Ainsi, tant que la prédalle 1 n'est pas en place sur le chantier, chaque incorporation 6, 7 est repliée ce qui permet de manipuler et de stocker plus facilement la prédalle 1, chaque incorporation 6, 7 ne dépasse alors pas ou peu de la face supérieure de la prédalle 1.

Chaque incorporation 6, 7 est par exemple conformée de sorte à présenter un fond ancré dans le corps en béton 2 de la prédalle 1 et quatre faces latérales articulées sur le fond pour pouvoir être repliées les unes sur les autres et sur le fond. Lorsque les quatre faces latérales sont dépliées, chaque incorporation 6, 7 forme donc un cube ouvert sur le dessus.

De façon particulière, chaque incorporation 6, 7 est conformée de sorte à présenter un couvercle fermant l'incorporation lorsqu'elle est en position dépliée. A cet effet, chaque incorporation 6, 7 comporte ici une paroi supplémentaire solidarisée aux quatre faces latérales pour fermer le haut du cube délimité par les quatre faces latérales de l'incorporation lorsque celle-ci est dépliée. Le couvercle est ici articulé sur le reste de l'incorporation 6, 7 concernée pour pouvoir laisser aisément accès à l'intérieur de l'incorporation 6, 7.

On protège ainsi l'intérieur des incorporations 6, 7 lors du coulage de la dalle de compression.

De façon particulière, le boîtier de réservation 5 et les incorporations 6, 7 sont conformés pour permettre de différencier boîtiers de réservation et incorporations.

Par exemple, le boîtier de réservation 5 est dans une première couleur et les incorporations 6, 7 sont dans une deuxième couleur différente de la première couleur.

Ceci permet à un ouvrier de repérer rapidement quels éléments sont associés à une réservation traversante de la prédalle 1 et quels éléments sont associés à une réservation non traversante de la prédalle 1, que les parois de ces éléments soient repliées ou non et/ou que le couvercle de ces éléments soit en place ou non.

De préférence, chaque incorporation 6, 7 et chaque boîtier de réservation 5 sont conformés pour permettre en outre de différencier les différents incorporations entre elles et les différentes boîtiers de réservation entre eux.

Par exemple, chaque boîtier de réservation 5 et chaque incorporation 6, 7 comporte un signe alphanumérique qui lui est propre.

Ceci facilite encore davantage le repérage des différents éléments de la prédalle 1 à un ouvrier.

Ici, chaque boîtier de réservation 5 et chaque incorporation 6, 7 comporte son signe alphanumérique noté sur son couvercle.

De préférence, ce signe alphanumérique est répété à d'autres endroits du boîtier de réservation 5 ou de l'incorporation 6, 7 associé et notamment, bien que non exclusivement, à l'intérieur du boîtier de réservation 5 ou de l'incorporation associé 6, 7. De la sorte, même si le couvercle est retiré, il est aisé pour un ouvrier de repérer l'élément considéré.

De préférence, la prédalle 1 comporte des moyens de repérage d'un chemin à faire emprunter à au moins une gaine destinée à s'étendre sur la face supérieure de la prédalle 1, lesdits moyens de repérage étant agencés sur la face supérieure de la prédalle 1.

De façon particulière, les moyens de repérage comportent des moyens de guidage destinés à guider l'agencement d'au moins une partie des gaînes sur la face supérieure de la prédalle 1.

Lesdits moyens de guidage comportent par exemple plusieurs cavaliers 8 distincts agencés sur la prédalle 1 à des emplacements différents et solidarisés séparément à la prédalle 1.

Chaque cavalier 8 est ici ancré dans le corps en béton 2 de la prédalle 1.

Comme pour la réservation 4 et les incorporations 6, 7, chaque cavalier 8 est agencé sur la prédalle 1 en fonction des plans de construction du plancher dont la prédalle 1 est destinée à faire partie (par exemple plan de type EXE ou encore de type DCE) afin que ledit cavalier 8 soit agencé de façon adéquate vis-à-vis du futur passage du réseau de gaînes horizontaux.

De façon préférée, chaque cavalier 8 est conformé de sorte à pouvoir être déplié et replié.

Ainsi, tant que la prédalle 1 n'est pas en place sur le chantier, chaque cavalier 8 peut-être replié ce qui permet de manipuler et de stocker plus facilement la prédalle, ledit cavalier 8 ne dépassant alors pas ou peu de la face supérieure de la prédalle 1.

Chaque cavalier 8 est par exemple conformé de sorte à présenter un platine ancrée dans le corps en béton 2 et deux pattes articulées sur la platine en deux points opposés de la platine pour pouvoir être repliée l'une sur l'autre. Lorsque les deux pattes sont dépliées, elles viennent s'appuyer l'une sur l'autre pour former une portion de guidage des gaînes de section triangulaire avec la platine. De façon préférée, les deux pattes sont munies de leurs moyens d'encliquetage de sorte que lorsqu'elles sont dépliées et appuyées l'une contre l'autre, elles viennent s'encliqueter l'une à l'autre formant ainsi une portion de guidage plus solide.

Le procédé de fabrication de cette prédalle 1 va être à présent décrit.

Au cours d'une première étape on étudie d'abord les plans de construction du plancher dont la prédalle 1 est destinée à faire partie (par exemple les plans de type EXE ou encore de type DCE, les plans d'exécution du réseau fluide, du réseau électrique ...).

On définit alors sur un plan dédié à chaque type de réseau donné, les chemins à faire emprunter aux gaines comprenant le cheminement à proprement parler ainsi que les zones de raccordement associées aux futures réservations supplémentaires non traversante.

Puis on définit sur un plan global pour l'ensemble des réseaux les chemins à faire emprunter aux gaines (comprenant le cheminement à proprement parler ainsi que les zones de raccordement associées aux futures réservations supplémentaires non traversante) de sorte à ce que l'agencement d'un réseau particulier ne gêne pas les autres réseaux. Ceci permet donc de déterminer à la fois où placer les incorporations 6, 7 et où placer les cavaliers 8 pour qu'ils dirigent efficacement les différentes gaines sur la prédalle 1. De préférence, on détermine aussi à partir de ce plan global où agencer les réservations traversantes et par là les boîtiers de réservation 4.

Il ne reste alors plus qu'à fabriquer chaque prédalle 1 du plan global en y intégrant incorporations, boîtiers de réservation et cavaliers en fonction du plan global.

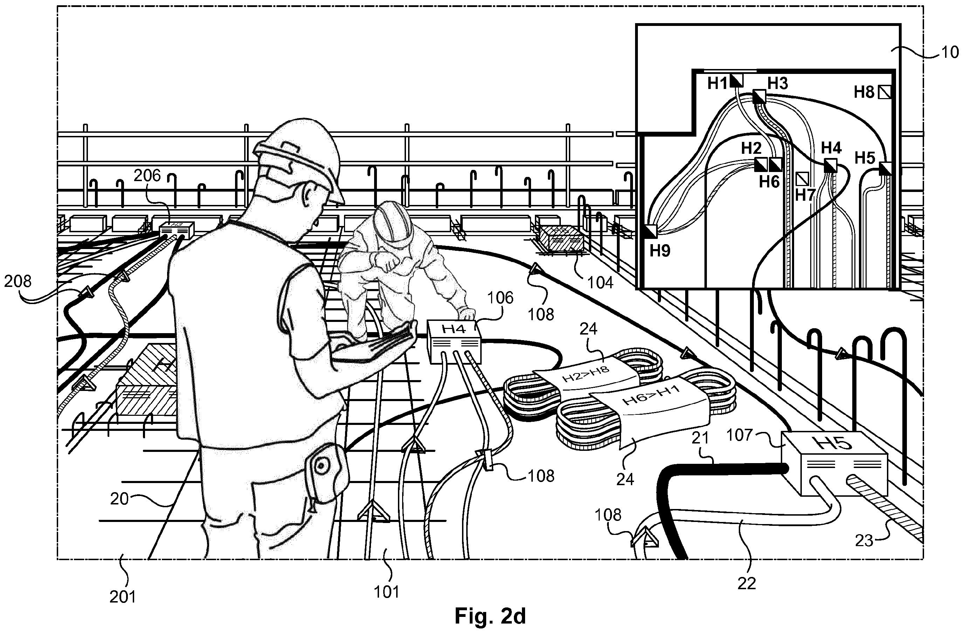

De préférence, le procédé comporte également l'étape de créer une carte dédiée aux prédalles (visible à la figure 2d) et de livrer cette carte avec les différentes prédalles.

Cette carte est configurée de sorte à symboliser les prédalles et les différents incorporations et boîtiers de réservation. Pour une meilleure visibilité, les incorporations et les boîtiers de réservation sont schématisés sur le plan par une forme géométrique de la couleur de l'élément concerné, le signe alphanumérique de l'élément concerné étant également noté sur le plan à côté de la forme géométrique.

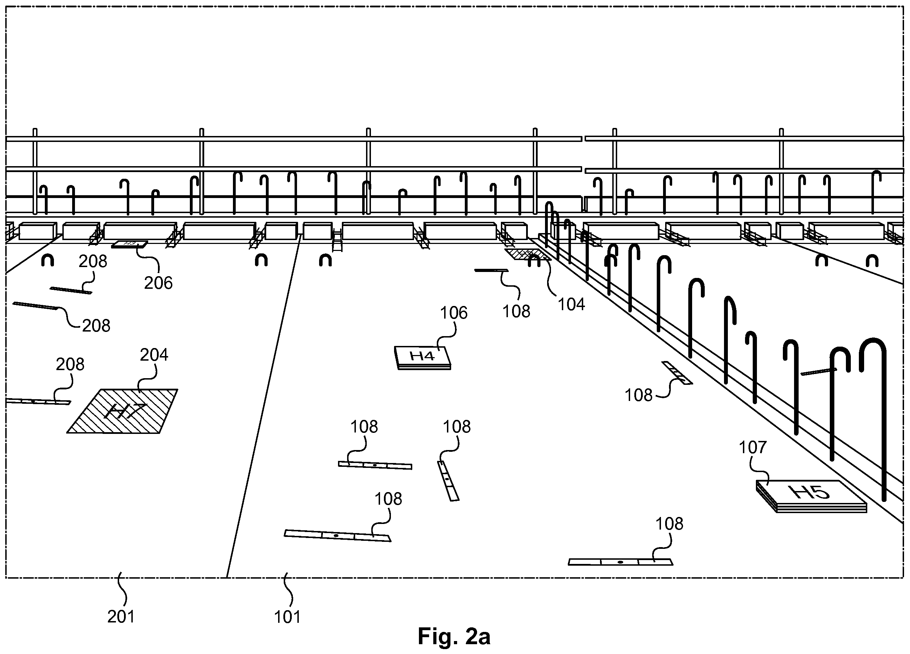

En variante ou en complément on peut également livrer le plan global avec les prédalles qui comprend d'autres informations importantes.Un procédé de montage du plancher va être à présent détaillé en référence aux figures 2a à 2f.

Comme illustré à la figure 2a, l'ouvrier agence les prédalles sur un réseau de poutres d'étaiement (non visible ici) .

Les différentes prédalles sont ici toutes des prédalles selon le mode de réalisation particulier de l'invention. Les différentes prédalles 101, 201 comportent donc chacune un ou des boîtiers de réservation 104, 204 et une ou des incorporations 106, 107, 206. Le nombre et le positionnement des différentes incorporations et boîtiers de réservation par prédalle dépendent des besoins du plancher considéré (besoins définis par les plans de constructions).

Ainsi, sur le site de construction même, l'ouvrier n'a pas besoin d'étudier les plans de construction de façon détaillée puisqu'il lui suffit d'agencer les différentes prédalles correctement pour que toutes les incorporations et tous les boîtiers de réservation se retrouvent directement bien agencés.

De préférence, le procédé comporte l'étape d'établir un plan dédié 10 aux prédalles (plan visible à la figure 2d) et de livrer ce plan avec les différentes prédalles. Ce plan dédié 10 est configuré de sorte à symboliser les prédalles et les différents incorporations et boîtiers de réservation.

Pour une meilleure visibilité, les incorporations et les boîtiers de réservation sont schématisés sur le plan par une forme géométrique de la couleur de l'élément concerné, le signe alphanumérique de l'élément concerné étant également noté sur le plan à côté de la forme géométrique.

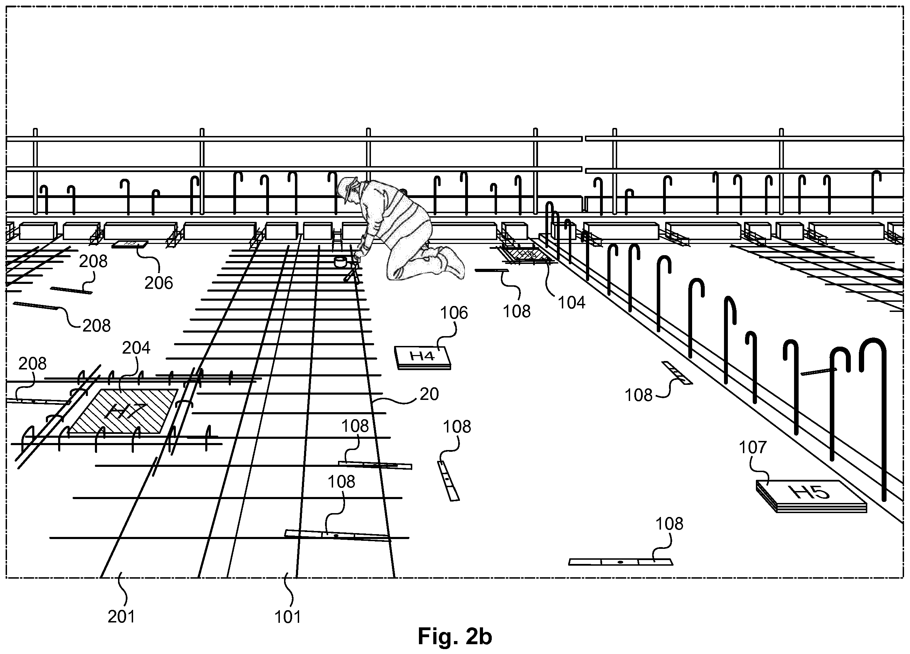

Au cours d'une deuxième étape illustrée à la figure 2b, l'ouvrier agence une partie des armatures métalliques 20 de soutien structurel du plancher.

Il est aidé en cette tâche par le fait que les différents incorporations et boîtiers de réservation nécessaires sont déjà présents. L'ouvrier n'a donc pas à se préoccuper d'un éventuel placement futur d'autres éléments de ce genre comme cela pouvait être le cas avec les procédés de l'art antérieur.

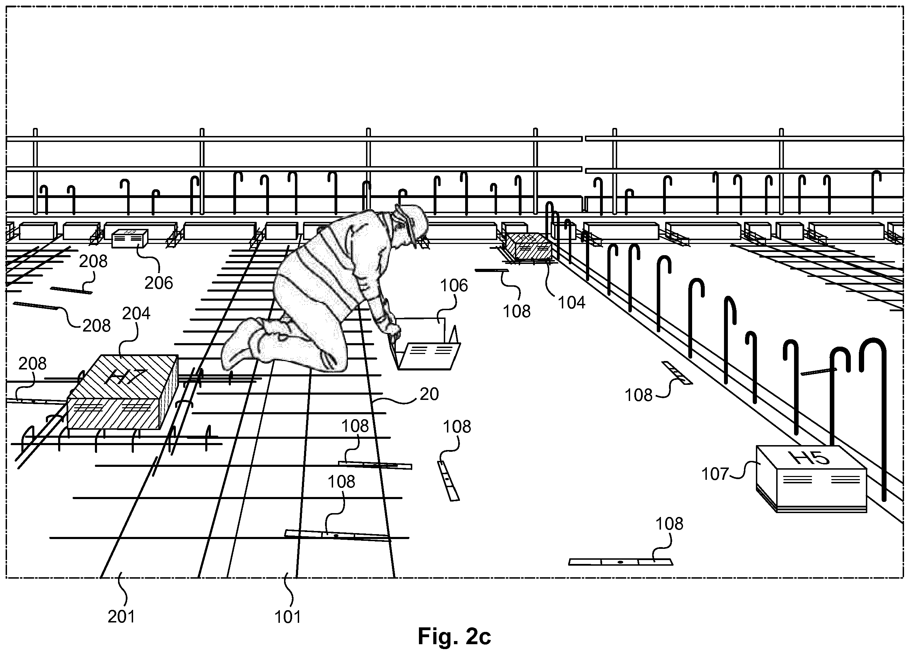

Au cours d'une troisième étape illustrée à la figure 2c, l'ouvrier procède au dépliage de tous les incorporations 106, 107, 206 et boîtiers de réservation 104, 204. Ceci permet de préparer les incorporations et les boîtiers de réservation au coulage de la dalle de compression.

On note que jusqu'à présent toutes les étapes sont réalisées par un même corps de métier.

Comme illustré à la figure 2d, les différents gaînes 21, 22, 23 (comportant les câbles et les conduites nécessaires pour l'électricité, la plomberie, la communication ... et dont une partie seulement est référencée à la figure 2d) sont agencées sur les prédalles et raccordées aux incorporations. Les gaînes 21, 22, 23 sont avantageusement liées aux prédalles et guidées dans leur chemins entre les différentes incorporations par les cavaliers 108, 208 qui sont dépliés et repliés autour des gaînes au fur et à mesure de la mise en place des gaînes.

De préférence, on configure le plan dédié 10 de sorte qu'il symbolise également les différents gaînes 21, 22, 23.

De façon préférée, les gaînes 21, 22, 23 sont d'une couleur différente selon le type de câbles et/ou de conduites que la gaîne concernée contient. Par exemple les gaines 23 dédiées à l'électricité sont rouges, les gaines 22 dédiées à l'eau sont bleues, les gaines 21 dédiées à la communication sont noires ... De préférence, le plan dédié 10 symbolise donc de façon correspondante les différentes gaînes par leur couleur ce qui facilite encore davantage la lecture du plan dédié 10.

De la sorte, le plan dédié 10 ainsi que la couleur des gaînes 21, 22, 23 et la couleur et le signe alphanumérique des différents incorporations 106, 107, 206 et boîtiers de réservation 104, 204 permettent très facilement de procéder à l'installation du réseau de gaînes. On note que cette étape peut ainsi également être mise en oeuvre par le même corps de métier que pour les étapes précédentes au contraire des procédés de l'art antérieur nécessitant l'intervention de différents corps de métier.

De façon particulière, chaque gaîne comporte également un symbole associé aux incorporations que la gaîne concernée est censée relier. Ici, chaque symbole reprend les signes alphanumériques des incorporations que la gaîne associée audit symbole est censée relier. Par exemple, une gaîne devant raccorder l'incorporation notée H1 et l'incorporation notée H2 comporte le symbole H1-H2.

Ce symbole est par exemple imprimé sur la gaîne ou encore porté par une étiquette solidarisée à la gaîne.

Ceci facilite encore davantage l'installation du réseau de gaînes sur les prédalles.

De préférence, les différents gaînes sont livrées sur chantier avec les prédalles et le plan dédié en étant regroupées par couleur dans un même paquet et/ou en étant regroupées par chemin à emprunter dans un même paquet 24 (c'est-à-dire que tous les gaînes devant raccorder l'incorporation notée H1 avec l'incorporation notée H2 sont livreés sur chantier groupées dans un même paquet). De façon préférée, chaque paquet comporte alors une mention de ladite couleur et ou dudit chemin à emprunter (par exemple la mention H1-H2 pour le paquet comprenant les gaînes devant raccorder l'incorporation notée H1 avec l'incorporation notée H2).

Ceci facilite la manutention des différentes gaînes. Ceci facilite en outre encore davantage l'installation du réseau de gaînes sur les prédalles.

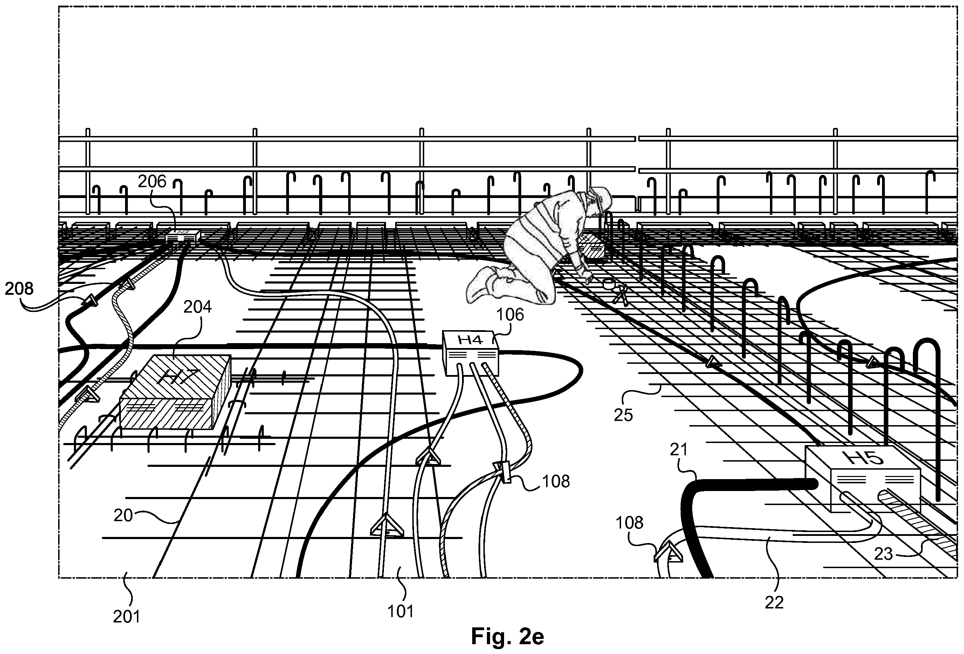

Au cours de la cinquième étape illustrée à la figure 2e, l'ouvrier achève le montage des armatures métalliques 25 de soutien structurel du plancher.

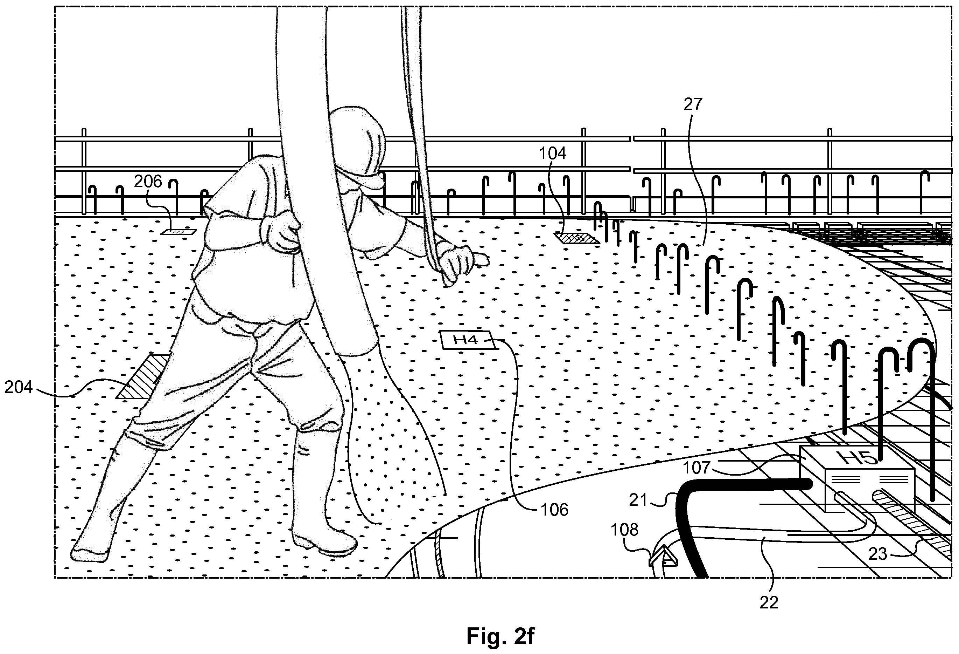

Enfin au cours de la sixième étape représentée à la figure 2f, l'ouvrier vient couler la dalle de compression 27 jusqu'à hauteur des couvercles des différents incorporations et boîtiers de réservation.

Ces deux autres étapes sont encore mise en oeuvre par le même corps de métier.

Une fois le béton pris, le plancher est donc créé. Les boîtiers de réservation ont ainsi permis de créer des ouvertures traversant le plancher et les incorporations des ouvertures traversant seulement la dalle de compression 27 et permettant d'avoir accès aux différentes gaînes qui y sont raccordées. Une fois le plancher achevé, il est donc possible d'ouvrir les différentes boîtiers et incorporations pour accéder à l'intérieur desdits boîtiers et incorporations et permettre l'agencement des canalisations verticales ou encore d'utiliser les câbles et/ou les conduites présentes dans les gaînes raccordées aux différentes incorporations.

De la sorte, il s'avère donc simple et rapide de monter un plancher. En particulier, seul un même corps de métier peut intervenir pour créer ledit plancher incluant l'étape de mise en place des gaînes.

L'invention n'est pas limitée à ce qui vient d'être décrit, mais bien au contraire englobe toute variante entrant dans le cadre défini par les revendications.

Bien entendu, le nombre de réservations et/ou le nombre d'incorporations par prédalle pourront être différents de ce qui a été indiqué.

Les incorporations et/ou les moyens de guidage pourront ne pas être ancrés dans le corps en béton de la prédalle mais pourront être seulement solidarisés à ce corps en béton par exemple par vissage, par collage ...

Les réservations, avec l'exception de la réservation définie par la revendication 1, pourront être de simples trous dans la prédalle et n'être ainsi pas définies par des boîtiers de réservation particuliers.

Les boîtiers de réservation et/ou les incorporations et/ou les moyens de guidage pourront ne pas être dépliables.

Les boîtiers de réservation et/ou les incorporations pourront ne pas comporter de fond et/ou de couvercle. Le couvercle pourra être indépendant du reste du boîtier de réservation considéré ou du reste de l'incorporation considérée et être par exemple emboîté ultérieurement sur le boîtier de réservation ou l'incorporation considérée.

Les boîtiers de réservation et/ou les incorporations pourront ne pas suffire seuls à créer des portions de coffrage lors du coulage de la dalle de compression. Par exemple, les boîtiers de réservation et/ou les incorporations pourront comporter des bordures sur lesquelles des portions de coffrage seront emboîtables ce qui permettra d'avoir un coffrage simple et rapide de ladite incorporation.

Les boîtiers de réservation pourront ne servir de portion de portion de coffrage que pour former la réservation dans la prédalle ou que pour former la réservation dans la dalle de compression (la réservation dans la prédalle étant alors formée autrement que par le boîtier de réservation associé).

La prédalle pourra ne pas comporter de moyens de guidage additionnels. La prédalle pourra ne pas comporter de réservation selon les besoins du plancher dont la prédalle est destinée à faire partie.

Les moyens de repérage pourront être différents de ce qui a été décrit. Par exemple, en remplacement et/ou en complément des moyens de guidage, les moyens de repérage pourront comprendre des de visualisation du chemin à faire emprunter à la gaine tels que des tracés des chemins devant être empruntés par les différentes gaînes, tracés directement représentés, de préférence en couleurs, sur la prédalle.

Il est bien entendu que la prédalle comprend au moins les signes alphanumériques selon la revendication 1.

Le plancher pourra comporter des prédalles traditionnelles en complément d'au moins une prédalle selon l'invention.

Les gaînes pourront être livrées solidairement des prédalles et indépendamment des prédalles. Par exemple les gaînes pourront être livrées déjà raccordées en partie ou en totalité aux incorporations ou à d'autres parties de la prédalle.

Les différentes étapes du procédé pourront être mises en oeuvre dans un ordre différent de ce qui a été indiqué. Par exemple on pourra déjà commencer à monter les armatures avant de déplier les différentes incorporations et les éventuels boîtiers de réservation.

En fonction de la configuration de la prédalle, le procédé de fabrication du plancher pourra être différent de ce qui a été décrit. Par exemple, l'étape de préparation des incorporations pourra comprendre d'autres actions qu'une ouverture des incorporations comme un emboîtement de portions de coffrage sur l'incorporation. Il pourra ne pas avoir d'étape de préparation des incorporations lorsque ceux-ci seront déjà déployés et prêts pour le coffrage lors du coulage de la dalle de compression.

## Revendications

1. Prédalle (1 ; 101, 201) comportant un corps en béton (2) et une incorporation (6, 7 ; 106, 107, 206) qui est solidarisée à la prédalle de sorte à être saillante d'une face supérieure de la prédalle sans s'étendre jusqu'à une face inférieure de la prédalle, l'incorporation étant destinée à former une réservation dans une dalle de compression coulée ultérieurement sur la prédalle, la prédalle (1 ; 101, 201) étant **caractérisée en ce qu'**elle comporte également au moins une réservation (4 ; 104, 204) ménagée dans le corps de la prédalle et un boîtier de réservation (5) associé à la réservation, ladite réservation (4 ; 104, 204) s'étendant sur toute la hauteur du corps en béton (2) pour former une ouverture traversante dans la prédalle (1 ; 101, 201), l'incorporation (6, 7 ; 106, 107, 206) et le boitier de réservation (5) comportant chacun un signe alphanumérique qui lui est propre pour faciliter le repérage de l'incorportation (6, 7 ; 106, 107, 206) et du boitier de réservation (5) à un ouvrier sur le chantier.

2. Prédalle selon la revendication 1, dans laquelle la réservation (4) est définie par le boîtier de réservation (5).

3. Prédalle selon la revendication 1, dans laquelle le boîtier de réservation (5) est conformé pour créer un premier niveau de coffrage dans le corps en béton (2) de la prédalle et pour créer un deuxième niveau de coffrage destiné à créer une ouverture dans une dalle de compression coulée sur la prédalle.

4. Prédalle selon la revendication 3, dans laquelle le boîtier de réservation (5) est conformé de sorte que le deuxième niveau de coffrage soit dépliable.

5. Prédalle selon l'une des revendications 1 à 4, dans laquelle le boîtier de réservation (5) présente un fond fermant la réservation au niveau de la face inférieure de la prédalle.

6. Prédalle selon l'une des revendications 1 à 5, dans laquelle le boîtier de réservation (5) est conformé de sorte à présenter un couvercle fermant le boîtier de réservation.

7. Prédalle selon l'une des revendications 1 à 6, dans laquelle l'incorporation (6, 7 ; 106, 107, 206) est dans une première couleur et le boîtier de réservation (5) dans une deuxième couleur différente de la première couleur.

8. Prédalle selon l'une des revendications précédentes, dans laquelle l'incorporation (6, 7 ; 106, 107, 206) est ancrée dans le corps en béton de la prédalle.

9. Prédalle selon l'une des revendications précédentes, dans lequel l'incorporation (6, 7 ; 106, 107, 206) est conformée pour créer un coffrage destiné à créer une ouverture dans une dalle de compression coulée sur la prédalle.

10. Prédalle selon l'une des revendications précédentes, dans laquelle l'incorporation (6, 7 ; 106, 107, 206) est conformée de sorte à pouvoir être dépliée et repliée.

11. Prédalle selon la revendication 10, dans laquelle l'incorporation (6, 7 ; 106, 107, 206) comporte un couvercle fermant l'incorporation lorsqu'elle est en position dépliée.

12. Prédalle selon l'une des revendications précédentes, dans laquelle la prédalle comporte des moyens de repérage d'un chemin à faire emprunter à au moins une gaine destinée à s'étendre sur la face supérieure de la prédalle, lesdits moyens de repérage étant agencés sur la face supérieure de la prédalle.

13. Prédalle selon la revendication 12, dans laquelle les moyens de repérage comportent des moyens de guidage destinés à guider la gaîne agencée sur une face supérieure de la prédalle.

14. Prédalle selon la revendication 13, dans laquelle les moyens de guidage comportent au moins un cavalier (8 ; 108, 108) solidarisé à la prédalle et à travers lequel la gaîne est destinée à s'étendre.

15. Prédalle selon la revendication 14, dans lequel le cavalier (8 ; 108, 108) est conformé de sorte à pouvoir être déplié et replié.

16. Prédalle selon la revendication 14 ou la revendication 15, dans laquelle le cavalier (8 ; 108, 108) est ancré dans le corps en béton.

17. Procédé de fabrication d'un plancher comportant les étapes de :
- accoler des prédalles pour former une base du plancher, au moins l'une des prédalles étant une prédalle selon l'une des revendications précédentes,
- poser un réseau de gaînes sur la base, au moins une gaîne étant raccordée à l'incorporation,
- couler la dalle de compression sur la base.

18. Procédé selon la revendication 17, comprenant l'étape de préparer l'incorporation de la prédalle pour le coulage de la future dalle de compression.

19. Procédé selon la revendication 17 ou la revendication 18, comprenant l'étape d'établir un plan dédié (10) aux prédalles et de livrer ce plan avec les prédalles, ce plan dédié étant configuré de sorte à symboliser les prédalles et les différents incorporations et boîtiers de réservation.

20. Procédé selon l'une des revendications 17 à 19, comprenant l'étape de livrer les gaînes directement avec les prédalles.

21. Procédé selon la revendication 20, dans lequel les gaînes est d'une couleur différente selon le type de câbles et/ou de conduites que la gaine concernée contient.

22. Procédé selon la revendication 20 ou la revendication 21, dans lequel chaque gaîne comporte également un symbole associé aux incorporations que la gaîne concernée est censée relier.

23. Procédé selon l'une des revendications 20 à 22, dans lequel les différentes gaines sont livrées sur chantier avec les prédalles et le plan dédié en étant regroupées par couleur dans un même paquet et/ou en étant regroupées par chemin à emprunter dans un même paquet (24).

24. Lot d'une première prédalle telle que définie par l'une des revendications 1 à 16 et d'une deuxième prédalle comportant un corps en béton et au moins une réservation ménagée dans le corps de la prédalle.

## Patentansprüche

1. Fertigplatte (1; 101, 201), umfassend einen Betonkörper (2) und ein Einbauelement (6, 7; 106, 107, 206), das derart mit der Fertigplatte verbunden ist, dass es von einer oberen Fläche der Fertigplatte vorsteht, ohne sich bis zu einer unteren Fläche der Fertigplatte zu erstrecken, wobei das Einbauelement dazu bestimmt ist, eine Aussparung in einer später auf die Fertigplatte gegossenen Druckbetonplatte zu bilden, wobei die Fertigplatte (1; 101, 201) **dadurch gekennzeichnet ist, dass** sie ebenso mindestens eine Aussparung (4; 104, 204) umfasst, die in dem Körper der Fertigplatte ausgebildet ist, sowie ein mit der Aussparung verbundenes Aussparungsgehäuse (5), wobei sich die genannte Aussparung (4; 104, 204) über die gesamte Höhe des Betonkörpers (2) erstreckt, um eine Durchgangsöffnung in der Fertigplatte (1; 101, 201) zu bilden, wobei das Einbauelement (6, 7; 106, 107, 206) und das Aussparungsgehäuse (5) jeweils ein alphanumerisches Zeichen umfassen, das ihm eigen ist, um die Ortung des Einbauelements (6, 7; 106, 107, 206) und des Aussparungsgehäuses (5) für einen Arbeiter auf der Baustelle zu erleichtern.

2. Fertigplatte nach Anspruch 1, bei der die Aussparung (4) von dem Aussparungsgehäuse (5) definiert ist.

3. Fertigplatte nach Anspruch 1, bei der das Aussparungsgehäuse (5) so geformt ist, dass es ein erstes Schalungsniveau in dem Betonkörper (2) der Fertigplatte erzeugt und ein zweites Schalungsniveau erzeugt, das dazu bestimmt ist, eine Öffnung in einer auf die Fertigplatte gegossenen Druckbetonplatte zu erzeugen.

4. Fertigplatte nach Anspruch 3, bei der das Aussparungsgehäuse (5) so geformt ist, dass das zweite Schalungsniveau aufklappbar ist.

5. Fertigplatte nach einem der Ansprüche 1 bis 4, bei der das Aussparungsgehäuse (5) einen Boden aufweist, der die Aussparung im Bereich der unteren Fläche der Fertigplatte verschließt.

6. Fertigplatte nach einem der Ansprüche 1 bis 5, bei der das Aussparungsgehäuse (5) so geformt ist, dass es eine Abdeckung aufweist, die das Aussparungsgehäuse verschließt.

7. Fertigplatte nach einem der Ansprüche 1 bis 6, bei der das Einbauelement (6, 7; 106, 107, 206) eine erste Farbe hat und das Aussparungsgehäuse (5) eine zweite Farbe hat, die von der ersten Farbe verschieden ist.

8. Fertigplatte nach einem der vorhergehenden Ansprüche, bei der das Einbauelement (6, 7; 106, 107, 206) in dem Betonkörper der Fertigplatte verankert ist.

9. Fertigplatte nach einem der vorhergehenden Ansprüche, bei der das Einbauelement (6, 7; 106, 107, 206) so geformt ist, dass es eine Schalung erzeugt, die dazu bestimmt ist, eine Öffnung in einer auf die Fertigplatte gegossenen Druckbetonplatte zu erzeugen.

10. Fertigplatte nach einem der vorhergehenden Ansprüche, bei der das Einbauelement (6, 7; 106, 107, 206) so geformt ist, dass es aufgeklappt und zusammengeklappt werden kann.

11. Fertigplatte nach Anspruch 10, bei der das Einbauelement (6, 7; 106, 107, 206) eine Abdeckung umfasst, die das Einbauelement verschließt, wenn es in der aufgeklappten Position ist.

12. Fertigplatte nach einem der vorhergehenden Ansprüche, bei der die Fertigplatte Ortungsmittel zur Ortung eines von mindestens einem Leerrohr zu benutzenden Weges umfasst, wobei das Leerrohr dazu bestimmt ist, sich auf der oberen Fläche der Fertigplatte zu erstrecken, wobei die genannten Ortungsmittel auf der oberen Fläche der Fertigplatte angeordnet sind.

13. Fertigplatte nach Anspruch 12, bei der die Ortungsmittel Führungsmittel umfassen, die dazu bestimmt sind, das Leerrohr zu führen, das auf einer oberen Fläche der Fertigplatte angeordnet ist.

14. Fertigplatte nach Anspruch 13, bei der die Führungsmittel mindestens eine Klammer (8; 108, 108) umfassen, die fest mit der Fertigplatte verbunden ist und durch die sich das Leerrohr erstrecken soll.

15. Fertigplatte nach Anspruch 14, bei der die Klammer (8; 108, 108) so geformt ist, dass sie aufgeklappt und zusammengeklappt werden kann.

16. Fertigplatte nach Anspruch 14 oder Anspruch 15, bei der die Klammer (8; 108, 108) in dem Betonkörper verankert ist.

17. Verfahren zum Herstellen einer Decke, umfassend die Schritte:
- Aneinanderfügen von Fertigplatten, um eine Basis der Decke zu bilden, wobei mindestens eine der Fertigplatten eine Fertigplatte nach einem der vorhergehenden Ansprüche ist,
- Verlegen eines Netzes aus Leerrohren auf der Basis, wobei mindestens ein Leerrohr mit dem Einbauelement verbunden ist,
- Gießen der Druckbetonplatte auf die Basis.

18. Verfahren nach Anspruch 17, umfassend den Schritt des Herstellens des Einbauelements der Fertigplatte für das Gießen der späteren Druckbetonplatte.

19. Verfahren nach Anspruch 17 oder Anspruch 18, umfassend den Schritt des Erstellens eines für die Fertigpatten speziellen Plans (10) und des Lieferns dieses Plans mit den Fertigplatten, wobei dieser spezielle Plan derart konfiguriert ist, dass er die Fertigplatten und die verschiedenen Einbauelemente und Aussparungsgehäuse symbolisch darstellt.

20. Verfahren nach einem der Ansprüche 17 bis 19, umfassend den Schritt des Lieferns der Leerrohre direkt mit den Fertigplatten.

21. Verfahren nach Anspruch 20, bei dem die Leerrohre je nach Art der Kabel und/oder Leitungen, die das betreffende Leerrohr enthält, eine unterschiedliche Farbe haben.

22. Verfahren nach Anspruch 20 oder Anspruch 21, bei dem jedes Leerrohr ferner ein Symbol umfasst, das mit den Einbauelementen verknüpft ist, die das betreffende Leerrohr verbinden soll.

23. Verfahren nach einem der Ansprüche 20 bis 22, bei dem die verschiedenen Leerrohre auf die Baustelle mit den Fertigplatten und dem speziellen Plan geliefert werden, indem sie in einem selben Bündel nach Farbe gruppiert sind und/oder indem sie in einem selben Bündel (24) nach dem zu benutzenden Weg gruppiert sind.

24. Satz aus einer ersten Fertigplatte, wie sie durch einen der Ansprüche 1 bis 16 definiert ist, und einer zweiten Fertigplatte, die einen Betonkörper und mindestens eine in dem Körper der Fertigplatte ausgebildete Aussparung umfasst.

## Claims

1. Pre-slab (1; 101, 201) comprising a concrete body (2) and an insert (6, 7; 106, 107, 206) which is secured to the pre-slab in such a way as to project from a top face of the pre-slab without extending down to the bottom face of the pre-slab, the insert being intended to form a void in a compression slab which is subsequently cast on the pre-slab, the pre-slab (1; 101, 201) being **characterised in that** it also comprises at least one void (4; 104, 204) arranged in the body of the pre-slab and a void box (5) associated with the void, said void (4; 104, 204) extending for the full height of the concrete body (2) to form a through-opening in the pre-slab (1; 101, 201), the insert (6, 7; 106, 107, 206) and the void box (5) each comprising an alphanumeric indicator peculiar to it to make it easy for a worker to locate the insert (6, 7; 106, 107, 206) and the void box (5) on site.

2. Pre-slab according to claim 1, wherein the void (4) is defined by the void box (5).

3. Pre-slab according to claim 1, wherein the void box (5) is configured to create a first level of formwork in the concrete body (2) of the pre-slab and to create a second level of formwork which is intended to create an opening in a compression slab which is cast on the pre-slab.

4. Pre-slab according to claim 3, wherein the void box (5) is configured in such a way that the second level of formwork can be folded into shape.

5. Pre-slab according to one of claims 1 to 4, wherein the void box (5) has a floor which closes off the void at the bottom face of the pre-slab.

6. Pre-slab according to one of claims 1 to 5, wherein the void box (5) is configured in such a way as to have a cover which closes off the void box.

7. Pre-slab according to one of claims 1 to 6, wherein the insert (6, 7; 106, 107, 206) is of a first colour and the void box (5) is of a second colour different from the first colour.

8. Pre-slab according to one of the preceding claims, wherein the insert (6, 7; 106, 107, 206) is anchored in the concrete body of the pre-slab.

9. Pre-slab according to one of the preceding claims, wherein the insert (6, 7; 106, 107, 206) is configured to create formwork intended to create an opening in a compression slab which is cast on the pre-slab.

10. Pre-slab according to one of the preceding claims, wherein the insert (6, 7; 106, 107, 206) is configured in such a way that folds in it can be folded over or folded straight.

11. Pre-slab according to claim 10, wherein the insert (6, 7; 106, 107, 206) comprises a cover which closes off the insert when the folds in the latter are folded straight.

12. Pre-slab according to one of the preceding claims, wherein the pre-slab comprises means for marking a path which at least one duct which is intended to extend across the top face of the pre-slab is to be made to follow, said marking means being arranged on the top face of the pre-slab.

13. Pre-slab according to claim 12, wherein the marking means comprise guiding means which are intended to guide the duct which is arranged on a top face of the pre-slab.

14. Pre-slab according to claim 13, wherein the guiding means comprise at least one clip (8; 108, 108) which is secured to the pre-slab and through which the duct is intended to extend.

15. Pre-slab according to claim 14, wherein the clip (8; 108, 108) is configured in such a way as to be able to be folded and unfolded.

16. Pre-slab according to claim 14 or claim 15, wherein the clip (8 108, 108) is anchored in the concrete body.

17. Method of producing a floor comprising the steps of:
- laying pre-slabs side by side to form a base for the floor, at least one of the pre-slabs being a pre-slab according to one of the preceding claims,
- laying a network of ducts on the base, with at least one duct being connected to the insert,
- casting the compression slab on the base.

18. Method according to claim 17, comprising the step of preparing the insert in the pre-slab for the casting of the future compression slab.

19. Method according to claim 17 or claim 18, comprising the step of drawing up a plan (10) specifically devoted to the pre-slabs and supplying this specific plan with the pre-slabs, this specific plan being drafted in such a way as to show the pre-slabs and the various inserts and void boxes in symbolic form.

20. Method according to one of claims 17 to 19, comprising the step of supplying the ducts directly with the pre-slabs.

21. Method according to claim 20, wherein the ducts are of different colours as dictated by the type of cables and/or pipes which the duct concerned contains.

22. Method according to claim 20 or claim 21, wherein each duct also comprises a symbol associated with the inserts which the duct concerned is supposed to connect.

23. Method according to one of claims 20 to 22, wherein the different ducts are delivered to site together with the pre-slabs and the specific plan, by being grouped together into one and the same pack by colour and/or by being grouped together into one and the same pack (24) by the path to be followed.

24. Lot comprising a first pre-slab as defined by one of claims 1 to 16 and a second pre-slab comprising a concrete body and at least one void arranged in the body of the pre-slab.
